# EUROPEAN PATENT APPLICATION

(11) **EP 4 827 160 A1**
(43) Date of publication of application: **21.10.2026**
(21) Application number: 24911133.7
(22) Date of filing: 24.12.2024
(51) Int. Cl.: H04W 24/10

(54) **SIGNAL MEASUREMENT METHOD, DEVICE AND SYSTEM**

(30) Priority: 29.12.2023 CN 202311856061
(71) Applicant: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); HUANG, Guogang, Shenzhen, Guangdong 518129 (CN); GAN, Ming, Shenzhen, Guangdong 518129 (CN)
(74) Representative: Maiwald GmbH
(86) International application number: PCT/CN2024/141929
(87) International publication number: WO 2025/140208

(57) **Abstract**

Embodiments of this application provide a signal measurement method, an apparatus, and a system, to perform signal measurement in a CSR scenario. The method may be applied to a first station and includes: receiving a first message from a first access point, where the first message is used to request the first station to send a first measurement result to the first access point when a difference between the first measurement result and a second measurement result is greater than a first threshold, the first measurement result is a result measured by the first station at a first time and related to a second access point, the second measurement result is a result measured by the first station at a second time and related to the second access point, and the second time is earlier than the first time; and sending a first measurement result to the first access point when the difference between the first measurement result and the second measurement result is greater than the first threshold.

## Description

This application claims priority to Chinese Patent Application No. 202311856061.3, filed with the China National Intellectual Property Administration on December 29, 2023 and entitled "SIGNAL MEASUREMENT METHOD, APPARATUS, AND SYSTEM", which is incorporated herein by reference in its entirety.

### TECHNICAL FIELD

This application relates to the field of wireless fidelity technologies, and in particular, to a signal measurement method, an apparatus, and a system.

### BACKGROUND

In a coordinated spatial reuse (coordinated spatial reuse, CSR) scenario, a plurality of access points (access points, APs) can perform transmission simultaneously on a same transmission resource, thereby improving utilization of the transmission resource. The transmission resource includes a channel and/or a resource block. It is assumed that while an AP 1 sends a signal to a station (station, STA) 1, an AP 2 sends a signal to a STA 2 on a same channel. In this case, the signal received by the STA 1 from the AP 1 is a useful signal, and the signal received by the STA 1 from the AP 2 is an interference signal. The STA 1 can measure strength of a beacon frame from the AP 2 and inform the AP 1 of a measurement result before the AP 1 and the AP 2 perform transmission simultaneously. In this case, the AP 1 can infer a path loss between the STA 1 and the AP 2 based on the measurement result, and then the AP 1 can control sending power of the AP 2, so that interference suffered by the STA 1 from the AP 2 is low. In other words, to reduce interference, the STA 1 needs to measure strength of a beacon frame from an AP other than the AP 1.

In an existing signal measurement method, the AP 1 may send a request frame to the STA 1, where the request frame is used to request the STA 1 to measure strength of a beacon frame from an AP other than the AP 1. The STA 1 may send a response frame including the measurement result to the AP 1 when a specific condition and threshold are satisfied.

However, the specific condition and threshold in the existing signal measurement method are designed for an AP handover scenario. Specifically, the AP 1 may determine, based on the measurement result of the STA 1 whether to hand over to an AP other than the AP 1. In other words, the specific condition and threshold in the existing signal measurement method are not applicable to a CSR scenario.

### SUMMARY

Embodiments of this application provide a signal measurement method, an apparatus, and a system, to perform signal measurement in a CSR scenario.

To achieve the foregoing objectives, the following technical solutions are used in embodiments of this application.

According to a first aspect, a signal measurement method is provided. An apparatus for performing the signal measurement method may be a first station, and may be a module used in the first station, for example, a chip or a chip system. The signal measurement method includes: receiving a first message from a first access point, where the first message is used to request the first station to send a first measurement result to the first access point when a difference between the first measurement result and a second measurement result is greater than a first threshold, the first measurement result is a result measured by the first station at a first time and related to a second access point, the second measurement result is a result measured by the first station at a second time and related to the second access point, and the second time is earlier than the first time; and sending a first measurement result to the first access point when the difference between the first measurement result and the second measurement result is greater than the first threshold.

In the signal measurement method provided in this embodiment of this application, the difference between the first measurement result and the second measurement result may reflect a variation amount of a measurement result related to the second access point. When the variation amount is greater than the first threshold, the first station sends the first measurement result to the first access point, so that the first access point may determine, based on the first measurement result, whether to initiate coordinated transmission to the second access point. In other words, the signal measurement method provided in this embodiment of this application is applicable to a CSR scenario.

With reference to the first aspect, in a possible implementation, a time interval between two adjacent measurements of the first station is less than or equal to a preset time interval. In this solution, the preset time interval is a maximum value of the time interval between two adjacent measurements, so that a technical effect of controlling a measurement periodicity may be achieved. When the time interval between two adjacent measurements is the preset time interval, the first station performs measurement at a lowest frequency. This helps save power generated by the first station due to measurement and reporting of a measurement result.

With reference to the first aspect, in a possible implementation, the preset time interval is carried in the first message. In this solution, since the preset time interval is carried in the first message sent by the first access point, the preset time interval is set more flexibly, in other words, a value of the preset time interval is easier to be modified.

With reference to the first aspect, in a possible implementation, the method further includes: when the difference between the first measurement result and the second measurement result is less than or equal to the first threshold within a preset duration, sending the first measurement result to the first access point. In this solution, if there is no preset duration, the first access point cannot receive the first measurement result all the time when the difference between the first measurement result and the second measurement result is always less than or equal to the first threshold, so that the first access point cannot know whether the first station is determining a condition for measurement and reporting of the measurement result. Therefore, the preset duration may be used by the first access point to determine that the first station is continuously determining the condition for measurement and reporting of the measurement result without interruption.

With reference to the first aspect, in a possible implementation, the preset duration is carried in the first message. In this solution, since the preset duration is carried in the first message sent by the first access point, the preset duration is set more flexibly, in other words, a value of the preset duration is easier to be modified.

With reference to the first aspect, in a possible implementation, the first measurement result and/or the second measurement result indicate/indicates relative strength of signals from the first access point and the second access point to the first station. In this solution, the relative strength may reflect a strength comparison between a signal from the first access point to the first station and a signal from the second access point to the first station. The relative strength may be represented through calculating a difference as mentioned in embodiments of this application, or through calculating a quotient or in another manner. This is not limited in embodiments of this application.

With reference to the first aspect, in a possible implementation, the relative strength of the signals from the first access point and the second access point to the first station is a difference between strength of a signal from the first access point and strength of a signal from the second access point that are measured by the first station.

With reference to the first aspect, in a possible implementation, the first measurement result is carried in the measurement response message.

With reference to the first aspect, in a possible implementation, the first measurement result is carried in an optional subelement field of the measurement response message.

With reference to the first aspect, in a possible implementation, the first measurement result and/or the second measurement result is/are strength of the signal from the second access point measured by the first station.

With reference to the first aspect, in a possible implementation, strength of a signal is a received channel power indicator RCPI or a received signal-to-noise indicator RSNI of the signal. In embodiments of this application, the strength of the signal may alternatively be represented by another parameter. This is not limited in embodiments of this application.

With reference to the first aspect, in a possible implementation, the first message includes an identifier of one or more second-access-points. In this solution, when the first message includes an identifier of a plurality of second access points, the first message may be used to simultaneously trigger the first station to perform measurement on the plurality of second access points. This can avoid transmission of a plurality of request messages that are in a one-to-one correspondence with the plurality of second access points, thereby achieving a technical effect of reducing signaling overhead.

With reference to the first aspect, in a possible implementation, the method further includes: receiving a second message from the first access point, where the second message is used to request querying whether the first station has the first measurement result to be fed back; and sending a third message to the first access point, where the third message indicates that the first station has the first measurement result to be fed back.

With reference to the first aspect, in a possible implementation, the method further includes: when the first station receives a fourth message from the first access point, updating a state of the first station to have the first measurement result to be fed back. In this solution, the state of the first station may be considered by default as having no first measurement result to be fed back. The fourth message may trigger state switching of the first station, to be specific, the fourth message may trigger the first station to update a state from having no first measurement result to be fed back to having the first measurement result to be fed back.

With reference to the first aspect, in a possible implementation, the second measurement result is a measurement result last sent by the first station to the first access point before the first time. In this solution, the difference between the first measurement result and the second measurement result may reflect a variation amount of a measurement result related to the second access point in a more timely manner.

With reference to the first aspect, in a possible implementation, the first threshold is carried in the first message.

According to a second aspect, a signal measurement method is provided. An apparatus for performing the signal measurement method may be a first station, and may be a module used in the first station, for example, a chip or a chip system. The signal measurement method includes: receiving a first message from a first access point, where the first message is used to request the first station to send a first measurement result to the first access point when a second message from the first access point is received, the first measurement result is a result measured by the first station at a first time and related to a second access point; and sending the first measurement result to the first access point in response to the second message received from the first access point.

In the signal measurement method provided in this embodiment of this application, the first access point may send the second message to the first station when the first access point is required to initiate coordinated transmission to the second access point. Then, the first access point may determine, based on the first measurement result fed back by the first station, whether to initiate coordinated transmission to the second access point. In other words, the signal measurement method provided in this embodiment of this application is applicable to a CSR scenario.

With reference to the second aspect, in a possible implementation, a time interval between two adjacent measurements of the first station is less than or equal to a preset time interval. In this solution, the preset time interval is a maximum value of the time interval between two adjacent measurements, so that a technical effect of controlling a measurement periodicity may be achieved. When the time interval between two adjacent measurements is the preset time interval, the first station performs measurement at a lowest frequency. This helps save power generated by the first station due to measurement and reporting of a measurement result.

With reference to the second aspect, in a possible implementation, the preset time interval is carried in the first message. In this solution, since the preset time interval is carried in the first message sent by the first access point, the preset time interval is set more flexibly, in other words, a value of the preset time interval is easier to be modified.

With reference to the second aspect, in a possible implementation, the first measurement result indicates relative strength of signals from the first access point and the second access point to the first station. In this solution, the relative strength may reflect a strength comparison between a signal from the first access point to the first station and a signal from the second access point to the first station. The relative strength may be represented through calculating a difference as mentioned in embodiments of this application, or through calculating a quotient or in another manner. This is not limited in embodiments of this application.

With reference to the second aspect, in a possible implementation, the relative strength of the signals from the first access point and the second access point to the first station is a difference between strength of a signal from measured by the first station from the first access point and strength of a signal measured by the first station from the second access point.

With reference to the second aspect, in a possible implementation, the first measurement result is carried in the measurement response message.

With reference to the second aspect, in a possible implementation, the first measurement result is carried in an optional subelement field of the measurement response message.

With reference to the second aspect, in a possible implementation, the first measurement result is strength of the signal measured by the first station from the second access point.

With reference to the second aspect, in a possible implementation, strength of a signal is a received channel power indicator RCPI or a received signal-to-noise indicator RSNI of the signal. In embodiments of this application, the strength of the signal may alternatively be represented by another parameter. This is not limited in embodiments of this application.

With reference to the second aspect, in a possible implementation, the first message includes an identifier of one or more second-access-points. In this solution, when the first message includes an identifier of a plurality of second access points, the first message may be used to simultaneously trigger the first station to perform measurement on the plurality of second access points. This can avoid transmission of a plurality of request messages that are in a one-to-one correspondence with the plurality of second access points, thereby achieving a technical effect of reducing signaling overhead.

With reference to the second aspect, in a possible implementation, the first message includes indication information, and the indication information indicates the first station to send the first measurement result to the first access point when the second message from the first access point is received.

With reference to the second aspect, in a possible implementation, the first message is a measurement request message, and the indication information is carried in a measurement request mode field or a measurement mode field of the first message.

With reference to the second aspect, in a possible implementation, the method further includes: receiving a third message from the first access point, where the third message is used to request querying whether the first station has the first measurement result to be fed back; and sending a fourth message to the first access point, where the fourth message indicates that the first station has the first measurement result to be fed back.

With reference to the second aspect, in a possible implementation, the method further includes: when the difference between the first measurement result is greater than a first threshold, updating a state of the first station to have the first measurement result to be fed back; where the second measurement result is a result measured by the first station at a second time and related to the second access point, and the second time is earlier than the first time. In this solution, the state of the first station may be considered by default as having no first measurement result to be fed back. A condition that the difference between the first measurement result and the second measurement result is greater than the first threshold may trigger state switching of the first station, to be specific, the condition may trigger the first station to update the state from having no first measurement result to be fed back to having the first measurement result to be fed back.

With reference to the second aspect, in a possible implementation, the second measurement result is a measurement result last sent by the first station to the first access point before the first time.

With reference to the second aspect, in a possible implementation, the first threshold is carried in the first message. In this solution, the difference between the first measurement result and the second measurement result may reflect a variation amount of a measurement result related to the second access point in a more timely manner.

According to a third aspect, a signal measurement method is provided. An apparatus for performing the signal measurement method may be a first station, and may be a module used in the first station, for example, a chip or a chip system. The signal measurement method includes: receiving a first message from a first access point; where the first message is used to request the first station to send a first measurement result to the first access point, the first measurement result is a result related to the second access point measured by the first station at a first time, and a time interval between two adjacent measurements is less than or equal to a preset time interval; and sending the first measurement result to the first access point.

In the signal measurement method provided in this embodiment of this application, the preset time interval is a maximum value of the time interval between two adjacent measurements, so that a technical effect of controlling a measurement periodicity may be achieved. When the time interval between two adjacent measurements is the preset time interval, the first station performs measurement at a lowest frequency. This helps save power generated by the first station due to measurement and reporting of a measurement result.

With reference to the third aspect, in a possible implementation, the preset time interval is carried in the first message. In this solution, since the preset time interval is carried in the first message sent by the first access point, the preset time interval is set more flexibly, in other words, a value of the preset time interval is easier to be modified.

With reference to the third aspect, in a possible implementation, the first measurement result indicates relative strength of signals from the first access point and the second access point to the first station. In this solution, the relative strength may reflect a strength comparison between a signal from the first access point to the first station and a signal from the second access point to the first station. The relative strength may be represented through calculating a difference as mentioned in embodiments of this application, or through calculating a quotient or in another manner. This is not limited in embodiments of this application.

With reference to the third aspect, in a possible implementation, the relative strength of the signal from the first access point and the second access point to the first station is a difference between strength of a signal measured by the first station from the first access point and strength of a signal measured by the first station from the second access point.

With reference to the third aspect, in a possible implementation, the first measurement result is carried in the measurement response message.

With reference to the third aspect, in a possible implementation, the first measurement result is carried in an optional subelement field of the measurement response message.

With reference to the third aspect, in a possible implementation, the first measurement result is strength of the signal measured by the first station from the second access point.

With reference to the third aspect, in a possible implementation, strength of a signal is a received channel power indicator RCPI or a received signal-to-noise indicator RSNI of the signal. In embodiments of this application, the strength of the signal may alternatively be represented by another parameter. This is not limited in embodiments of this application.

With reference to the third aspect, in a possible implementation, the first message includes one or more second-access-point identifiers. In this solution, when the first message includes an identifier of a plurality of second access points, the first message may be used to simultaneously trigger the first station to perform measurement on the plurality of second access points. This can avoid transmission of a plurality of request messages that are in a one-to-one correspondence with the plurality of second access points, thereby achieving a technical effect of reducing signaling overhead.

According to a fourth aspect, a signal measurement method is provided. An apparatus for performing the signal measurement method may be a first access point, and may be a module used in the first access point, for example, a chip or a chip system. The signal measurement method includes: sending the first message to the first station, where the first message is used to request the first station to send a first measurement result to the first access point when a difference between the first measurement result and a second measurement result is greater than a first threshold, the first measurement result is a result measured by the first station at a first time and related to a second access point, the second measurement result is a result measured by the first station at a second time and related to the second access point, and the second time is earlier than the first time; and sending a first measurement result to the first access point when a difference between the first measurement result and the second measurement result is greater than the first threshold, receiving the first measurement result from the first station.

With reference to the fourth aspect, in a possible implementation, a time interval between two adjacent measurements of the first station is less than or equal to a preset time interval.

With reference to the fourth aspect, in a possible implementation, the preset time interval is carried in the first message.

With reference to the fourth aspect, in a possible implementation, the method further includes: receiving the first measurement result from the first station when a difference between the first measurement result and the second measurement result is less than or equal to the first threshold within a preset duration.

With reference to the fourth aspect, in a possible implementation, the preset duration is carried in the first message.

With reference to the fourth aspect, in a possible implementation, the first measurement result and/or the second measurement result indicate/indicates relative strength of signals from the first access point and the second access point to the first station.

With reference to the fourth aspect, in a possible implementation, the relative strength of the signal from the first access point and the second access point to the first station is a difference between strength of a signal measured by the first station from the first access point and strength of a signal measured by the first station from the second access point.

With reference to the fourth aspect, in a possible implementation, the first measurement result is carried in the measurement response message.

With reference to the fourth aspect, in a possible implementation, the first measurement result is carried in an optional subelement field of the measurement response message.

With reference to the fourth aspect, in a possible implementation, the first measurement result and/or the second measurement result is/are strength of the signal measured by the first station from the second access point.

With reference to the fourth aspect, in a possible implementation, strength of a signal is a received channel power indicator RCPI or a received signal-to-noise indicator RSNI of the signal.

With reference to the fourth aspect, in a possible implementation, the first message includes one or more second-access-point identifiers.

With reference to the fourth aspect, in a possible implementation, the method further includes: sending the second message to the first station, where the second message is used to request querying whether there is a first measurement result in the first station to be fed back; and receiving a third message from the first station, where the third message indicates that there is a first measurement result in the first station to be fed back.

With reference to the fourth aspect, in a possible implementation, the second measurement result is a measurement result last sent by the first station to the first access point before the first time.

With reference to the fourth aspect, in a possible implementation, the first threshold is carried in the first message.

For technical effects brought by any one of the possible implementations of the fourth aspect, refer to the technical effects brought by the first aspect or different implementations of the first aspect. Details are not described herein again.

According to a fifth aspect, a signal measurement method is provided. An apparatus for performing the signal measurement method may be a first access point, and may be a module used in the first access point, for example, a chip or a chip system. The signal measurement method includes: sending the first message to the first station, where the first message is used to request the first station to send a first measurement result to the first access point when a second message from the first access point is received, the first measurement result is a result related to the second access point measured by the first station at a first time; and sending the second message to the first station and receiving the first measurement result from the first station.

With reference to the fifth aspect, in a possible implementation, a time interval between two adjacent measurements of the first station is less than or equal to a preset time interval.

With reference to the fifth aspect, in a possible implementation, the preset time interval is carried in the first message.

With reference to the fifth aspect, in a possible implementation, the first measurement result indicates relative strength of the signal from the first access point and the second access point to the first station.

With reference to the fifth aspect, in a possible implementation, the relative strength of the signal from the first access point and the second access point to the first station is a difference between strength of a signal measured by the first station from the first access point and strength of a signal measured by the first station from the second access point.

With reference to the fifth aspect, in a possible implementation, the first measurement result is carried in the measurement response message.

With reference to the fifth aspect, in a possible implementation, the first measurement result is carried in an optional subelement field of the measurement response message.

With reference to the fifth aspect, in a possible implementation, the first measurement result is strength of the signal measured by the first station from the second access point.

With reference to the fifth aspect, in a possible implementation, strength of a signal is a received channel power indicator RCPI or a received signal-to-noise indicator RSNI of the signal.

With reference to the fifth aspect, in a possible implementation, the first message includes one or more second-access-point identifiers.

With reference to the fifth aspect, in a possible implementation, the first message includes indication information, and the indication information indicates the first station to send the first measurement result to the first access point when the second message from the first access point is received.

With reference to the fifth aspect, in a possible implementation, the first message is a measurement request message, and the indication information is carried in a measurement request mode field or a measurement mode field of the first message.

With reference to the fifth aspect, in a possible implementation, the method further includes: sending the third message to the first station, where the third message is used to request querying whether there is a first measurement result in the first station to be fed back; and receiving a fourth message from the first station, where the fourth message indicates that there is a first measurement result in the first station to be fed back.

For technical effects brought by any one of the possible implementations of the fifth aspect, refer to the technical effects brought by the second aspect or different implementations of the second aspect. Details are not described herein again.

According to a sixth aspect, a signal measurement method is provided. An apparatus for performing the signal measurement method may be a first station, and may be a module used in the first station, for example, a chip or a chip system. The signal measurement method includes: sending the first message from the first station; where the first message is used to request the first station to send a first measurement result to the first access point, the first measurement result is a result related to the second access point measured by the first station at a first time, and a time interval between two adjacent measurements is less than or equal to a preset time interval; and receiving the first measurement result from the first station.

With reference to the sixth aspect, in a possible implementation, the preset time interval is carried in the first message.

With reference to the sixth aspect, in a possible implementation, the first measurement result indicates relative strength of the signal from the first access point and the second access point to the first station.

With reference to the sixth aspect, in a possible implementation, the relative strength of the signal from the first access point and the second access point to the first station is a difference between strength of a signal measured by the first station from the first access point and strength of a signal measured by the first station from the second access point.

With reference to the sixth aspect, in a possible implementation, the first measurement result is carried in the measurement response message.

With reference to the sixth aspect, in a possible implementation, the first measurement result is carried in an optional subelement field of the measurement response message.

With reference to the sixth aspect, in a possible implementation, the first measurement result is strength of the signal measured by the first station from the second access point.

With reference to the sixth aspect, in a possible implementation, strength of a signal is a received channel power indicator RCPI or a received signal-to-noise indicator RSNI of the signal.

With reference to the sixth aspect, in a possible implementation, the first message includes one or more second-access-point identifiers.

For technical effects brought by any one of the possible implementations of the sixth aspect, refer to the technical effects brought by the third aspect or different implementations of the third aspect. Details are not described herein again.

According to a seventh aspect, a communication apparatus is provided, configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the seventh aspect, in a possible implementation, the communication apparatus includes: a transceiver module and a measurement module; the transceiver module is configured to receive the first message from the first access point, where the first message is used to request the transceiver module to send the first measurement result to the first access point when a difference between a first measurement result and a second measurement result is greater than a first threshold, the first measurement result is a result measured by the measurement module at a first time and related to the second access point, the second measurement result is a result measured by the measurement module at a second time related to the second access point, and the second time is earlier than the first time; the transceiver module is further configured to send the first measurement result to the first access point when a difference between the first measurement result and the second measurement result is greater than the first threshold.

With reference to the seventh aspect, in a possible implementation, a time interval between two adjacent measurements of the first measurement module is less than or equal to a preset time interval.

With reference to the seventh aspect, in a possible implementation, the preset time interval is carried in the first message.

With reference to the seventh aspect, in a possible implementation, the transceiver module is further configured to send the first measurement result to the first access point when a difference between the first measurement result and the second measurement result is less than or equal to the first threshold within a preset duration.

With reference to the seventh aspect, in a possible implementation, the preset duration is carried in the first message.

With reference to the seventh aspect, in a possible implementation, the first measurement result and/or the second measurement result indicate/indicates relative strength of signals from the first access point and the second access point to the communication apparatus.

With reference to the seventh aspect, in a possible implementation, the relative strength of the signal from the first access point and the second access point to the communication apparatus is a difference between strength of a signal from the first access point and strength of a signal from the second access point measured by the communication apparatus.

With reference to the seventh aspect, in a possible implementation, the first measurement result is carried in the measurement response message.

With reference to the seventh aspect, in a possible implementation, the first measurement result is carried in an optional subelement field of the measurement response message.

With reference to the seventh aspect, in a possible implementation, the first measurement result and/or the second measurement result is/are strength of the signal from the second access point measured by the measurement module.

With reference to the seventh aspect, in a possible implementation, strength of a signal is a received channel power indicator RCPI or a received signal-to-noise indicator RSNI of the signal.

With reference to the seventh aspect, in a possible implementation, the first message includes one or more identifiers of the second access point.

With reference to the seventh aspect, in a possible implementation, the transceiver module is further configured to receive a second message from the first access point, where the second message is used to request querying whether there is a first measurement result in the communication apparatus to be fed back; and sending a third message to the first access point, where the third message indicates that there is a first measurement result in the communication apparatus to be fed back.

With reference to the seventh aspect, in a possible implementation, the communication apparatus further includes a state updating module; where the state updating module is configured to update the state of the first station to indicate that the first measurement result to be fed back when the first station receives a fourth message from the first access point.

With reference to the seventh aspect, in a possible implementation, the second measurement result is a measurement result last sent by the transceiver module to the first access point before the first time.

With reference to the seventh aspect, in a possible implementation, the first threshold is carried in the first message.

For technical effects brought by any one of the possible implementations of the seventh aspect, refer to the technical effects brought by the first aspect or different implementations of the first aspect. Details are not described herein again.

According to an eighth aspect, a communication apparatus is provided, configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the eighth aspect, in a possible implementation, the communication apparatus includes: a transceiver module and a measurement module; where the transceiver module is configured to receive the first message from the first access point, where the first message is used to request the first station to send a first measurement result to the first access point when the transceiver module receives a second message from the first access point, the first measurement result is a result related to the second access point measured by the measurement module at a first time; and the transceiver module is configured to send the first measurement result to the first access point in response to the second message received from the first access point.

With reference to the eighth aspect, in a possible implementation, a time interval between two adjacent measurements of the first measurement module is less than or equal to a preset time interval.

With reference to the eighth aspect, in a possible implementation, the preset time interval is carried in the first message.

With reference to the eighth aspect, in a possible implementation, the first measurement result indicates relative strength of signals from the first access point and the second access point to the communication apparatus.

With reference to the eighth aspect, in a possible implementation, the relative strength of the signal from the first access point and the second access point to the communication apparatus is a difference between strength of a signal from the first access point and strength of a signal from the second access point measured by the communication apparatus.

With reference to the eighth aspect, in a possible implementation, the first measurement result is carried in the measurement response message.

With reference to the eighth aspect, in a possible implementation, the first measurement result is carried in an optional subelement field of the measurement response message.

With reference to the eighth aspect, in a possible implementation, the first measurement result is strength of the signal from the second access point measured by the measurement module.

With reference to the eighth aspect, in a possible implementation, strength of a signal is a received channel power indicator RCPI or a received signal-to-noise indicator RSNI of the signal.

With reference to the eighth aspect, in a possible implementation, the first message includes one or more second-access-point identifiers.

With reference to the eighth aspect, in a possible implementation, the first message includes indication information, and the indication information indicates the transceiver module to send the first measurement result to the first access point when the second message from the first access point is received.

With reference to the eighth aspect, in a possible implementation, the first message is a measurement request message, and the indication information is carried in a measurement request mode field or a measurement mode field of the first message.

With reference to the eighth aspect, in a possible implementation, the transceiver module is further configured to receive a third message from the first access point, where the third message is used to request querying whether there is a first measurement result in the communication apparatus to be fed back; and sending a fourth message to the first access point, where the fourth message indicates that there is a first measurement result in the communication apparatus to be fed back.

With reference to the eighth aspect, in a possible implementation, the communication apparatus further includes a state update module, where the state update module is configured to update the state of the communication apparatus to indicate that the first measurement result to be fed back when a difference between the first measurement result is greater than a first threshold; where the second measurement result is a result related to the second access point measured by the measurement module at a second time, and the second time is earlier than the first time.

With reference to the eighth aspect, in a possible implementation, the second measurement result is a measurement result last sent by the transceiver module to the first access point before the first time.

With reference to the eighth aspect, in a possible implementation, the first threshold is carried in the first message.

For technical effects brought by any one of the possible implementations of the eighth aspect, refer to the technical effects brought by the second aspect or different implementations of the second aspect. Details are not described herein again.

According to a ninth aspect, a communication apparatus is provided, configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the ninth aspect, in a possible implementation, the communication apparatus includes a transceiver module and a measurement module, where the transceiver module is configured to receive the first message from the first access point; where the first message is used to request the transceiver module to send a first measurement result to the first access point, the first measurement result is a result related to the second access point measured by the measurement module at a first time, and a time interval between two adjacent measurements is less than or equal to a preset time interval; and the transceiver module is further configured to send the first measurement result to the first access point.

With reference to the ninth aspect, in a possible implementation, the preset time interval is carried in the first message.

With reference to the ninth aspect, in a possible implementation, the first measurement result indicates relative strength of signals from the first access point and the second access point to the communication apparatus.

With reference to the ninth aspect, in a possible implementation, the relative strength of the signal from the first access point and the second access point to the communication apparatus is a difference between strength of a signal from the first access point and strength of a signal from the second access point measured by the communication apparatus.

With reference to the ninth aspect, in a possible implementation, the first measurement result is carried in the measurement response message.

With reference to the ninth aspect, in a possible implementation, the first measurement result is carried in an optional subelement field of the measurement response message.

With reference to the ninth aspect, in a possible implementation, the first measurement result is strength of the signal from the second access point measured by the measurement module.

With reference to the ninth aspect, in a possible implementation, strength of a signal is a received channel power indicator RCPI or a received signal-to-noise indicator RSNI of the signal.

With reference to the ninth aspect, in a possible implementation, the first message includes one or more second-access-point identifiers.

For technical effects brought by any one of the possible implementations of the ninth aspect, refer to the technical effects brought by the third aspect or different implementations of the third aspect. Details are not described herein again.

According to a tenth aspect, a communication apparatus is provided, configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the tenth aspect, in a possible implementation, the communication apparatus includes: a receiving module and a sending module; where the sending module is configured to send the first message to the first station, where the first message is used to request the first station to send a first measurement result to the communication apparatus point when a difference between the first measurement result and a second measurement result is greater than a first threshold, the first measurement result is a result measured by the first station at a first time and related to a second access point, the second measurement result is a result measured by the first station at a second time and related to the second access point, and the second time is earlier than the first time; the receiving module is configured to receive the first measurement result from the first station when a difference between the first measurement result and the second measurement result is greater than the first threshold.

With reference to the tenth aspect, in a possible implementation, a time interval between two adjacent measurements of the first station is less than or equal to a preset time interval.

With reference to the tenth aspect, in a possible implementation, the preset time interval is carried in the first message.

With reference to the tenth aspect, in a possible implementation, the receiving module is further configured to receive the first measurement result from the first station when a difference between the first measurement result and the second measurement result is less than or equal to the first threshold within a preset duration.

With reference to the tenth aspect, in a possible implementation, the preset duration is carried in the first message.

With reference to the tenth aspect, in a possible implementation, the first measurement result and/or the second measurement result indicate/indicates relative strength of signals from the communication apparatus and the second access point to the first station.

With reference to the tenth aspect, in a possible implementation, the relative strength of the signal from the communication apparatus and the second access point to the first station is a difference between strength of a signal measured by the first station from the communication apparatus and strength of a signal measured by the first station from the second access point.

With reference to the tenth aspect, in a possible implementation, the first measurement result is carried in the measurement response message.

With reference to the tenth aspect, in a possible implementation, the first measurement result is carried in an optional subelement field of the measurement response message.

With reference to the tenth aspect, in a possible implementation, the first measurement result and/or the second measurement result is/are strength of the signal measured by the first station from the second access point.

With reference to the tenth aspect, in a possible implementation, strength of a signal is a received channel power indicator RCPI or a received signal-to-noise indicator RSNI of the signal.

With reference to the tenth aspect, in a possible implementation, the first message includes one or more second-access-point identifiers.

With reference to the tenth aspect, in a possible implementation, the sending module is further configured to send the second message to the first station, where the second message is used to request querying whether there is a first measurement result in the first station to be fed back; and the receiving module is further configured to receive a third message from the first station, where the third message indicates that there is a first measurement result in the first station to be fed back.

With reference to the tenth aspect, in a possible implementation, the second measurement result is a measurement result last sent by the first station to the communication apparatus before the first time.

With reference to the tenth aspect, in a possible implementation, the first threshold is carried in the first message.

For technical effects brought by any one of the possible implementations of the tenth aspect, refer to the technical effects brought by the first aspect or different implementations of the first aspect. Details are not described herein again.

According to an eleventh aspect, a communication apparatus is provided, configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the eleventh aspect, in a possible implementation, the communication apparatus includes: a sending module and a receiving module; where the sending module is configured to send the first message to the first station, where the first message is used to request the first station to send a first measurement result to the communication apparatus when the first station receives a second message from the communication apparatus, the first measurement result is a result related to the second access point measured by the first station at a first time; the sending module is further configured to send the second message to the first station; the receiving module is configured to receive the first measurement result from the first station.

With reference to the eleventh aspect, in a possible implementation, a time interval between two adjacent measurements of the first station is less than or equal to a preset time interval.

With reference to the eleventh aspect, in a possible implementation, the preset time interval is carried in the first message.

With reference to the eleventh aspect, in a possible implementation, the first measurement result indicates relative strength of signals from the communication apparatus and the second access point to the first station.

With reference to the eleventh aspect, in a possible implementation, the relative strength of the signal from the communication apparatus and the second access point to the first station is a difference between strength of a signal measured by the first station from the communication apparatus and strength of a signal measured by the first station from the second access point.

With reference to the eleventh aspect, in a possible implementation, the first measurement result is carried in the measurement response message.

With reference to the eleventh aspect, in a possible implementation, the first measurement result is carried in an optional subelement field of the measurement response message.

With reference to the eleventh aspect, in a possible implementation, the first measurement result is strength of the signal measured by the first station from the second access point.

With reference to the eleventh aspect, in a possible implementation, strength of a signal is a received channel power indicator RCPI or a received signal-to-noise indicator RSNI of the signal.

With reference to the eleventh aspect, in a possible implementation, the first message includes one or more second-access-point identifiers.

With reference to the eleventh aspect, in a possible implementation, the first message includes indication information, and the indication information indicates the first station to send the first measurement result to the communication apparatus when the second message from the communication apparatus is received.

With reference to the eleventh aspect, in a possible implementation, the first message is a measurement request message, and the indication information is carried in a measurement request mode field or a measurement mode field of the first message.

With reference to the eleventh aspect, in a possible implementation, the sending module is further configured to send the third message to the first station, where the third message is used to request querying whether there is a first measurement result in the first station to be fed back; and the receiving module is further configured to receive a fourth message from the first station, where the fourth message indicates that there is a first measurement result in the first station to be fed back.

For technical effects brought by any one of the possible implementations of the eleventh aspect, refer to the technical effects brought by the second aspect or different implementations of the second aspect. Details are not described herein again.

According to a twelfth aspect, a communication apparatus is provided, configured to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the twelfth aspect, in a possible implementation, the communication apparatus includes: a sending module and a receiving module; where the sending module is configured to send the first message to the first station; where the first message is used to request the first station to send a first measurement result to the communication apparatus, the first measurement result is a result related to the second access point measured by the first station at a first time, and a time interval between two adjacent measurements is less than or equal to the preset time interval; the receiving module is configured to receive the first measurement result from the first station.

With reference to the twelfth aspect, in a possible implementation, the preset time interval is carried in the first message.

With reference to the twelfth aspect, in a possible implementation, the first measurement result indicates relative strength of signals from the communication apparatus and the second access point to the first station.

With reference to the twelfth aspect, in a possible implementation, the relative strength of the signal from the communication apparatus and the second access point to the first station is a difference between strength of a signal measured by the first station from the communication apparatus and strength of a signal measured by the first station from the second access point.

With reference to the twelfth aspect, in a possible implementation, the first measurement result is carried in the measurement response message.

With reference to the twelfth aspect, in a possible implementation, the first measurement result is carried in an optional subelement field of the measurement response message.

With reference to the twelfth aspect, in a possible implementation, the first measurement result is strength of the signal measured by the first station from the second access point.

With reference to the twelfth aspect, in a possible implementation, strength of a signal is a received channel power indicator RCPI or a received signal-to-noise indicator RSNI of the signal.

With reference to the twelfth aspect, in a possible implementation, the first message includes one or more second-access-point identifiers.

For technical effects brought by any one of the possible implementations of the twelfth aspect, refer to the technical effects brought by the third aspect or different implementations of the third aspect. Details are not described herein again.

According to a thirteenth aspect, a communication apparatus is provided, including: a processor; the processor is used to couple to a memory, and after reading computer instructions stored in the memory, perform the method according to any one of the first aspect to the sixth aspect based on the instructions.

With reference to the thirteenth aspect, in a possible implementation, the communication apparatus further includes a memory. The memory is used to store computer instructions.

With reference to the thirteenth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the thirteenth aspect, in a possible implementation, the communication apparatus may be a chip or a chip system. When the communication apparatus is a chip system, the communication apparatus may include a chip, or may include the chip and another discrete device.

With reference to the thirteenth aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may also be embodied as a processing circuit or a logic circuit.

According to a fourteenth aspect, a communication system is provided, including: a second access point, a first station used to perform the method according to the first aspect, and a first access point used to perform the method according to the fourth aspect; or including: a second access point, a first station used to perform the method according to the second aspect, and a first access point used to perform the method according to the fifth aspect; or including: a second access point, a first station used to perform the method according to the third aspect, and a first access point used to perform the method according to the sixth aspect.

According to a fifteenth aspect, a computer-readable storage medium is provided. The computer-readable storage medium stores instructions; and when the instructions run on a computer, the computer is enabled to perform the method according to any one of the first aspect to the sixth aspect.

According to a sixteenth aspect, a computer program product including instructions is provided. When the computer program product runs on a computer, the computer is enabled to perform the method according to any one of the first aspect to the sixth aspect.

For technical effects brought by any one of the possible implementations of the thirteenth aspect to the sixteenth aspect, refer to the technical effects brought by different implementations of the first aspect to the third aspect. Details are not described herein again.

### BRIEF DESCRIPTION OF DRAWINGS

FIG. 1 is a diagram of a structure of a request frame in the current 802.11 standard;
FIG. 2 is a diagram of a structure of a measurement request element field in the current 802.11 standard;
FIG. 3 is a diagram of a structure of a measurement request field in the current 802.11 standard;
FIG. 4 is a diagram of a network architecture of multi-AP coordinated communication according to an embodiment of this application;
FIG. 5 is a diagram of composition of a WLAN device according to an embodiment of this application;
FIG. 6 is a flowchart of a signal measurement method according to an embodiment of this application;
FIG. 7 is a diagram of a structure of a first message according to an embodiment of this application;
FIG. 8 is a diagram 1 of a structure of a subelement according to an embodiment of this application;
FIG. 9 is a diagram of a structure of a measurement response message according to an embodiment of this application;
FIG. 10 is a diagram 2 of a structure of a subelement according to an embodiment of this application.
FIG. 11 is a diagram 3 of a structure of a subelement according to an embodiment of this application;
FIG. 12 is a diagram 4 of a structure of a subelement according to an embodiment of this application;
FIG. 13 is a flowchart of another signal measurement method according to an embodiment of this application;
FIG. 14 is a diagram of a structure of a measurement request mode field according to an embodiment of this application;
FIG. 15 is a flowchart of still another signal measurement method according to an embodiment of this application;
FIG. 16 is a diagram 1 of a structure of a communication apparatus according to an embodiment of this application; and
FIG. 17 is a diagram 2 of a structure of a communication apparatus according to an embodiment of this application.

### DESCRIPTION OF EMBODIMENTS

For ease of understanding the technical solutions in embodiments of this application, the following first briefly describes technologies or terms related to this application.

### 1. Multi-AP coordinated transmission and CSR scenario

With the popularization of the wireless fidelity (wireless fidelity, Wi-Fi) technology, APs are increasingly dense. Increasingly dense AP may cause more inter-AP interference. How to reduce inter-AP interference through multi-AP coordinated transmission to further improve users' quality of service is an urgent problem to be resolved in next-generation Wi-Fi technology. In embodiments of this application, "inter-AP interference" may alternatively be replaced with "interbasic service set (basic service set, BSS) interference" or "inter-cell interference". This is uniformly described herein, and details are not described below again.

Multi-AP coordinated transmission includes a CSR scenario. In a CSR scenario, low inter-AP interference may be ensured through power control and/or user selection. Specifically, in one aspect, a sharing AP may control sending power of a shared AP, to control interference. Herein, the sharing (sharing) AP may be an AP that initiates multi-AP coordinated transmission, and the shared (shared) AP may be one or more other APs whose transmission resources or transmission opportunities are shared. In another aspect, it is assumed that an AP 1 needs to send a signal to an STA 1. In this case, the AP 1 may select to initiate coordinated transmission to an AP 2 with weakest strength of a signal to the STA 1, thereby controlling interference to the STA 1 when a signal from the AP 1 is received.

As described in the background, it is assumed that while the AP 1 sends a signal to the STA 1, the AP 2 sends a signal to the STA 2 on a same channel. If the AP 1 is a sharing AP, the AP 1 may control sending power of the AP 2 based on a measurement result from the STA 1, so that interference from the AP 2 to the STA 1 is lower. If the AP 1 is a shared AP, the AP 1 may infer a path loss between the STA 1 and the AP 2 based on a measurement result from the STA 1, so that the AP 1 may select an appropriate transmission parameter, for example, a modulation and coding set (modulation and coding set, MCS) and/or a number of spatial and time stream (number of spatial and time stream, NSTS), to send a signal to the STA 1, so that transmission between the AP 1 and the STA 1 can still be implemented when the sending power of the AP 1 is limited. It can be learned that, regardless of whether the AP 1 is a sharing AP or a shared AP, in order to reduce inter-AP interference, the STA 1 needs to measure strength of a beacon frame from an AP other than the AP 1.

In embodiments of this application, strength of a received beacon frame or signal may be represented by a received channel power indicator (received channel power indicator, RCPI) or a received signal-to-noise indicator (received signal-to-noise indicator, RSNI). The strength of the received beacon frame or signal may alternatively be represented by another parameter. This is not limited in embodiments of this application.

### 2. Current signal measurement method

In a current signal measurement method, a request frame sent by the AP 1 to the STA 1 and a response frame sent by the STA 1 to the AP 1 may be, for example, respectively a radio measurement request (radio measurement request) frame and a response (response) frame in the 802.11 standard. Specifically, measurement types that correspond to the radio measurement request and the response frame are respectively a beacon frame request (beacon request) and a beacon report (beacon report).

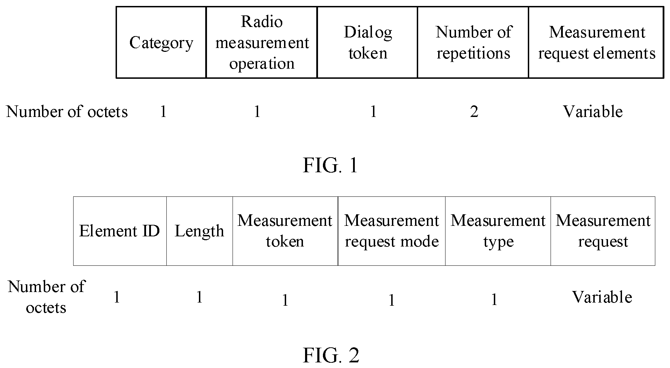

For example, FIG. 1 is a diagram of a structure of a request frame in the current 802.11 standard. Herein, the request frame includes a category (category) field, a radio measurement action (radio measurement action) field, a dialog token (dialog token) field, a number of repetitions (number of repetitions) field, and a measurement request element (measurement request elements) field. Herein, the category field, the radio measurement action field, and the dialog token field each may occupy one octet (octet); the number of repetitions field may occupy two octets; and a number of octets occupied by the measurement request element field is variable. The number of repetitions field may carry information about a number of repetitions requested.

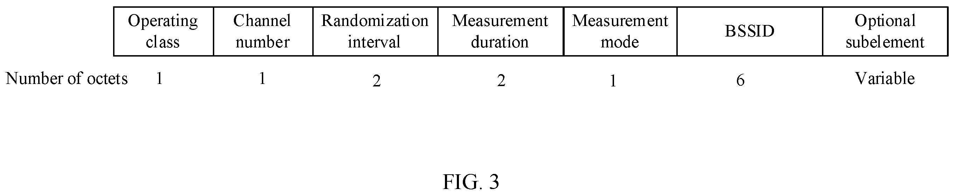

For example, FIG. 2 is a diagram of a structure of the measurement request element field. Herein, the measurement request element field includes an element (element) identity (identity, ID) field, a length (length) field, a measurement token (measurement token) field, a measurement request mode (measurement request mode) field, a measurement type (measurement type) field, and a measurement request (measurement request) field. Herein, the element identity field, the length field, the measurement token field, the measurement request mode field, and the measurement type field each may occupy one octet; and a number of octets occupied by the measurement request field is variable. The measurement type field may carry information about a measurement type. A value of the measurement type field is 5, indicating that the measurement type is a beacon frame request. In the measurement type, a structure of the measurement request field is shown in FIG. 3.

In FIG. 3, the measurement request field includes an operating class (operating class) field, a channel number (channel number) field, a randomization interval (randomization interval) field, a measurement duration (measurement duration) field, a measurement mode (measurement mode) field, a basic service set identity (basic service set identity, BSSID) field, and an optional subelement (optional subelements) field. Herein, the operating class field, the channel number field, and the measurement mode field each may occupy one octet; the randomization interval field and the measurement duration field each may occupy two octets; the BSSID field may occupy six octets; and a number of octets occupied by the optional subelement field is variable. The operating class field and the channel number field may respectively carry information about an operating class and a channel position of a target AP on which measurement is requested. The measurement mode may specifically include passive measurement, active measurement, and a beacon table (beacon table). The BSSID field may carry information about a BSSID corresponding to a related AP on which measurement is requested.

In FIG. 3, the optional subelement field may carry information about one or more optional subelements, for example, a beacon reporting (beacon reporting) subelement. The beacon reporting subelement may specifically include a reporting condition (reporting condition) field and a threshold/offset reference (threshold/offset reference) field. The reporting condition field may carry information about a condition for the STA 1 to send measurement report to the AP 1, and the threshold/offset reference field may carry threshold information in the condition for the STA 1 to send the measurement report to the AP 1. The condition for the STA 1 to send the measurement report to the AP 1 may be: An RCPI (or RSNI) value of a beacon frame, from the target AP, measured by the STA 1 is higher than (or lower than) a specific threshold; or a difference between an RCPI (or RSNI) value of a beacon frame, from the target AP, measured by the STA 1 and an RCPI (or RSNI) value of a serving AP is higher than (or lower than) a specific threshold. Herein, the serving AP may be the AP 1. A specific condition may be shown in Table 1.

**Table 1**

| Conditions for sending report in repetitions | Reporting conditions |
|---|---|
| Report to be sent after each measurement (a default value, used when a beacon reporting subelement is not included in a beacon frame request). | 0 |
| A measured RCPI level is higher than a threshold included in a threshold/offset reference. | 1 |
| A measured RCPI level is lower than a threshold included in a threshold/offset reference. | 2 |
| A measured RSNI level is higher than a threshold included in a threshold/offset reference. | 3 |
| A measured RSNI level is lower than a threshold included in a threshold/offset reference. | 4 |
| A measured RCPI level is higher than a threshold defined by an offset relative to a reference RCPI of a serving AP, where the offset value is included in a threshold/offset reference. | 5 |
| A measured RCPI level is lower than a threshold defined by an offset relative to a reference RCPI of a serving AP, wherein the offset value is included in a threshold/offset reference. | 6 |
| A measured RSNI level is higher than a threshold defined by an offset relative to a reference RSNI of a serving AP, where the offset value is included in a threshold/offset reference. | 7 |
| A measured RSNI level is lower than a threshold defined by an offset relative to reference RSNI of a serving AP, wherein the offset value is included in a threshold/offset reference. | 8 |
| A measured RCPI level is within a range constrained by a reference RCPI of a serving AP and an offset relative to the reference RCPI of the serving AP, wherein the offset value is included in a threshold/offset reference. | 9 |
| A measured RSNI level is within a range constrained by a reference RSNI of a serving AP and an offset relative to the reference RSNI of the serving AP, wherein the offset value is included in a threshold/offset reference. | 10 |
| Reserved | 11 to 255 |

However, the foregoing condition for the STA 1 to send measurement report to the AP 1 is designed for a roaming requirement, specifically for an AP handover scenario, and has a low matching degree with a CSR scenario.

The following describes the technical solutions in embodiments of this application with reference to the accompanying drawings in embodiments of this application. Herein, in the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

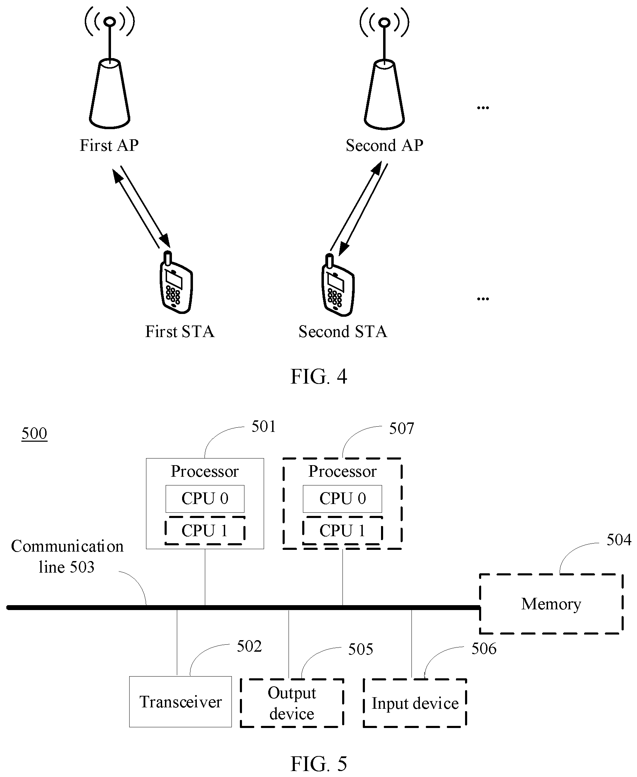

FIG. 4 is a diagram of a network architecture of multi-AP coordinated communication according to an embodiment of this application. The network includes at least two APs and at least two STAs. In embodiments of this application, the AP may be an AP device, or may be an AP multi-link device (multi-link device, MLD). The STA may be a (non-AP) STA device, or may be a non-AP MLD. This is not limited in embodiments of this application. For ease of description, FIG. 4 shows only two APs: a first AP and a second AP, and two STAs: a first STA and a second STA. Herein, it is expected that communication between the first AP and the first STA and communication between the second AP and the second STA are simultaneously performed on a same transmission resource.

The MLD in embodiments of this application may be a single-antenna device, or may be a multi-antenna device. For example, the multi-link device may be a device with more than two antennas. A number of antennas included in the MLD is not limited in embodiments of this application. Frequency bands on which the multi-link device works may include but are not limited to sub-1 GHz, 2.4 GHz, 5 GHz, 6 GHz, and a high-frequency 60 GHz.

The STA in embodiments of this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, Internet of Things (internet of things, IoT) devices, computing devices, or another processing device connected to a wireless modem that have a wireless communication function, and a user equipment (user equipment, UE) of various forms, a mobile station (mobile station, MS), a terminal (terminal), a terminal equipment (terminal equipment), a portable communication device, a handheld device, a portable computing device, an entertainment device, a game device or system, a global positioning system device, or any other appropriate device configured to perform network communication via a wireless medium. In addition, the STA may support the 802.11be standard. The STA may also support a plurality of WLAN standards such as 802.11ax, 802.11ac, 802.11n, 802.11g, 802.11b, and 802.11a.

The AP in embodiments of this application may be an apparatus in other words deployed in a wireless communication network to provide a wireless communication function for a STA associated with the AP. The AP is mainly deployed at home, inside a building, and in a campus, with a typical coverage radius of tens of meters to hundreds of meters. Certainly, the AP may alternatively be deployed outdoors. The AP is equivalent to a bridge that connects a wired network to a wireless network. The AP is mainly used to connect wireless network clients together, and then connect the wireless network to the Ethernet. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support the 802.11be standard. The AP may also support WLAN standards such as 802.11ax, 802.11ac, 802.11n, 802.11g, 802.11b, and 802.11a.

In some embodiments, the AP and the STA involved in this application may be collectively referred to as a WLAN device. In specific implementation, the WLAN device may use a composition structure shown in FIG. 5, or include the components shown in FIG. 5.

FIG. 5 is a diagram of the composition of a WLAN device 500 according to an embodiment of this application. The WLAN device 500 may be a STA or a chip or a chip system (or referred to as a system on chip) in a STA, or may be an AP or a chip or a chip system (or referred to as a system on chip) in an AP. In embodiments of this application, the chip system may include a chip, or may include a chip and another discrete component.

As shown in FIG. 5, the WLAN device 500 includes a processor 501, a transceiver 502, and a communication line 503. Further, the WLAN device 500 may further include a memory 504. The processor 501, the memory 504, and the transceiver 502 may be connected through the communication line 503.

The processor 501 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a component, or a software module. This is not limited.

The transceiver 502 is configured to communicate with another device or another communication network. The another communication network may be the Ethernet, a radio access network (radio access network, RAN), a WLAN, or the like. The transceiver 502 may be a module, a circuit, a transceiver, or any apparatus that can implement communication.

The communication line 503 is configured to transmit information between components included in the WLAN device 500.

The memory 504 is configured to store instructions. The instructions may be a computer program.

The memory 504 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 504 may be independent of the processor 501, or may be integrated with the processor 501. The memory 504 may be configured to store instructions, program code, some data, or the like. The memory 504 may be located inside the WLAN device 500, or may be located outside the WLAN device 500. This is not limited. The processor 501 is configured to execute the instructions stored in the memory 504, to implement the methods provided in the following embodiments of this application.

In an example, the processor 501 may include one or more CPUs, for example, a CPU 0 and a CPU 1 in FIG. 5.

In an optional implementation, the WLAN device 500 includes a plurality of processors. For example, in addition to the processor 501 in FIG. 5, the WLAN device 500 may further include a processor 507.

In an optional implementation, the WLAN device 500 further includes an output device 505 and an input device 506. For example, the input device 506 is a device, for example, a keyboard, a mouse, a microphone, or a joystick, and the output device 505 is a device, for example, a display or a speaker (speaker).

It should be understood that the composition structure shown in FIG. 5 does not constitute a limitation on the WLAN device. In addition to the components shown in FIG. 5, the WLAN device may include more or fewer components than those shown in the figure, some components may be combined, or different component arrangements may be used.

The following describes in detail the signal measurement method provided in the embodiments of this application with reference to FIG. 1 to FIG. 5.

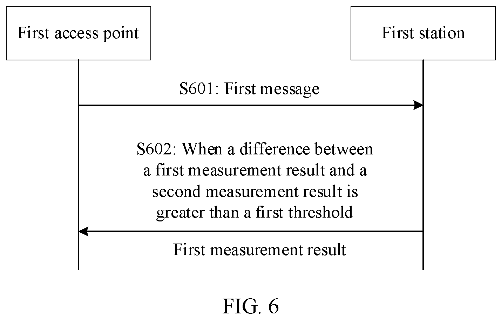

FIG. 6 shows a flowchart of a signal measurement method according to an embodiment of this application, including the following steps.

Step S601: A first access point sends a first message to a first station. Correspondingly, the first station receives the first message from the first access point.

The first message is used to request the first station to send a first measurement result to the first access point when a difference between the first measurement result and a second measurement result is greater than a first threshold, the first measurement result is a result measured by the first station at a first time and related to a second access point, the second measurement result is a result measured by the first station at a second time and related to the second access point, and the second time is earlier than the first time.

With reference to FIG. 4, the first access point in the embodiment shown in FIG. 6 may be the first AP in FIG. 4, the second access point in the embodiment shown in FIG. 6 may be the second AP in FIG. 4, and the first station in the embodiment shown in FIG. 6 may be the first STA in FIG. 4.

Optionally, the first threshold is carried in the first message.

Optionally, the second measurement result is a measurement result last sent by the first station to the first access point before the first time. In other words, the second time is a measurement time corresponding to the second measurement result last sent by the first station to the first access point before the first time. In this solution, the difference between the first measurement result and the second measurement result may reflect a variation amount of a measurement result related to the second access point in a more timely manner.

The second measurement result in this embodiment of this application may be a result of a single measurement, or may be a result obtained by performing an operation on a plurality of measurement results, for example, an average value, a median value, or a root mean square of the plurality of e measurement results. This is not limited in embodiments of this application.

In this embodiment of this application, the difference between the first measurement result and the second measurement result may be a value obtained by subtracting the second measurement result from the first measurement result, or may be a value obtained by subtracting the first measurement result from the second measurement result, or may be an absolute value of a value obtained by subtracting the second measurement result from the first measurement result. This is not limited in embodiments of this application.

Optionally, a time interval between two adjacent measurements of the first station is less than or equal to a preset time interval. In this solution, the preset time interval is a maximum value of the time interval between two adjacent measurements, so that a technical effect of controlling a measurement periodicity may be achieved. When the time interval between two adjacent measurements is the preset time interval, the first station performs measurement at a lowest frequency. This helps save power generated by the first station due to measurement and reporting of a measurement result.

Optionally, the preset time interval is carried in the first message. In this solution, since the preset time interval is carried in the first message sent by the first access point, the preset time interval is set more flexibly, in other words, a value of the preset time interval is easier to be modified.

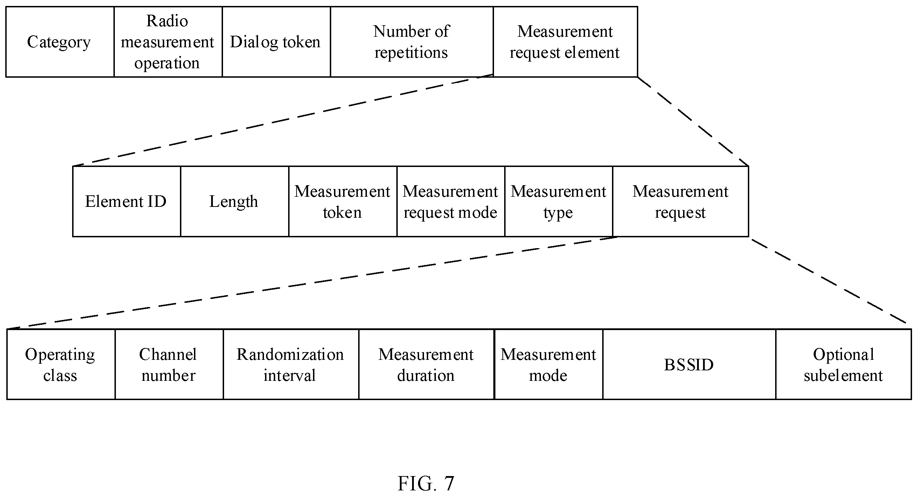

With reference to FIG. 1, FIG. 2 and FIG. 3, FIG. 7 is a diagram of a structure of the first message according to an embodiment of this application. For relevant descriptions about fields in FIG. 7, refer to the textual descriptions corresponding to FIG. 1, FIG. 2 and FIG. 3. Details are not described herein again.

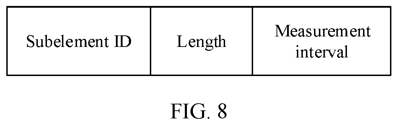

For example, the preset time interval may be carried in an optional subelement field shown in FIG. 7. The optional subelement field shown in FIG. 7 may include a subelement. A name of the subelement may be, for example, an extended measurement request subelement (extended measurement request subelement). A structure of the subelement may be shown in FIG. 8. In FIG. 8, the subelement may include a subelement ID (subelement ID) field, a length field, and a measurement interval (measurement interval) field. Specifically, the first measurement result may be carried in the measurement interval field shown in FIG. 8.

In addition, a value of the preset time interval may further be specified by a protocol. This is not limited in embodiments of this application.

The preset time interval in embodiments of this application may be in units of beacon interval (beacon interval, BI), millisecond (ms), time unit (time unit, TU), or 100 TU. This is not limited in embodiments of this application. Herein, the beacon interval may be a beacon interval of a BSS where the first access point is located or a beacon interval of a BSS where the second access point is located. The TU may be 1024 microseconds.

In a possible implementation, that the first measurement result and/or the second result is/are a result measured by the first station and related to the second access point includes: The first measurement result and/or the second measurement result is/are strength of the signal from the second access point measured by the first station.

The strength of the signal in this embodiment of this application is an RCPI or an RSNI of the signal. The strength of the signal may alternatively be represented by another parameter. This is not limited in embodiments of this application.

The first measurement result and/or the second measurement result in this embodiment of this application may be a measurement result for a signal, for example, a beacon frame.

In another possible implementation, that the first measurement result and/or the second result is/are a result measured by the first station and related to the second access point includes: The first measurement result and/or the second measurement result indicates/indicate relative strength of signals from the first access point and the second access point to the first station. In this solution, the relative strength may reflect a strength comparison between a signal from the first access point to the first station and a signal from the second access point to the first station. The relative strength may be represented through calculating a difference as mentioned in embodiments of this application, or through calculating a quotient or in another manner. This is not limited in embodiments of this application.

For example, the relative strength of the signals from the first access point and the second access point to the first station is a difference between strength of a signal measured by the first station from the first access point and strength of a signal measured by the first station from the second access point.

In this embodiment of this application, the relative strength of the signals from the first access point and the second access point to the first station may be a value obtained by subtracting the strength of the signal from the second access point from the strength of the signal from the first access point measured by the first station, or may be a value obtained by subtracting the strength of the signal measured by the first station from the first access point and the strength of the signal measured by the first station from the second access point. The first definition is used as an example, a larger first measurement result and/or a larger second measurement result indicates that the signal from the first access point to the first station is stronger than the signal from the second access point to the first station. For the first station, the signal from the first access point to the first station is a useful signal, and the signal from the second access point to the first station is an interference signal. Therefore, a larger signal-to-interference ratio indicates a more suitable situation for performing multi-AP coordinated transmission. In this case, the first access point may initiate coordinated transmission to the second access point based on the first measurement result received in step S602. Conversely, a smaller first measurement result and/or second measurement result indicate/indicates a less suitable situation for performing multi-AP coordinated transmission. In this case, the first access point may not initiate coordinated transmission to the second access point based on the first measurement result received in step S602. Specifically, the first access point may select a device, for example, the first access point may hand over the first station to the second access point, or the first access point may select a station other than the first station as a target transmission object.

Similarly, if the second definition is used as an example, a smaller first measurement result and/or second measurement result indicate/indicates a more suitable situation for performing multi-AP coordinated transmission; and a larger first measurement result and/or second measurement result indicate/indicates a less suitable situation for performing multi-AP coordinated transmission.

Optionally, the first measurement result is carried in a measurement response message.

Optionally, the first measurement result is carried in an optional subelement field of the measurement response message.

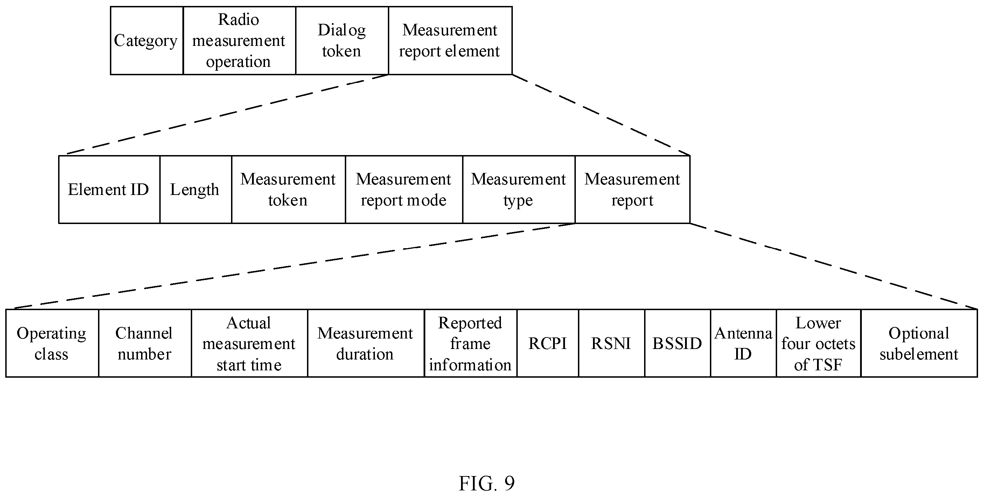

For example, FIG. 9 is a diagram of a structure of the measurement response message. The measurement response message may include a category field, a radio measurement action field, a dialog token field, and a measurement report element (measurement report elements) field. Further, the measurement report element field may include an element ID field, a length field, a measurement token field, a measurement report mode (measurement report mode) field, a measurement type field, and a measurement report (measurement report) field. Further, the measurement report field may include an operating class field, a channel number field, an actual measurement start time (actual measurement start time) field, a measurement time field, a reported frame information (reported frame information) field, an RCPI field, an RSNI field, a BSSID field, an antenna (antenna) ID field, a lower four octets of a time synchronization function (parent time synchronization function, parent TSF) field, and an optional subelement field.

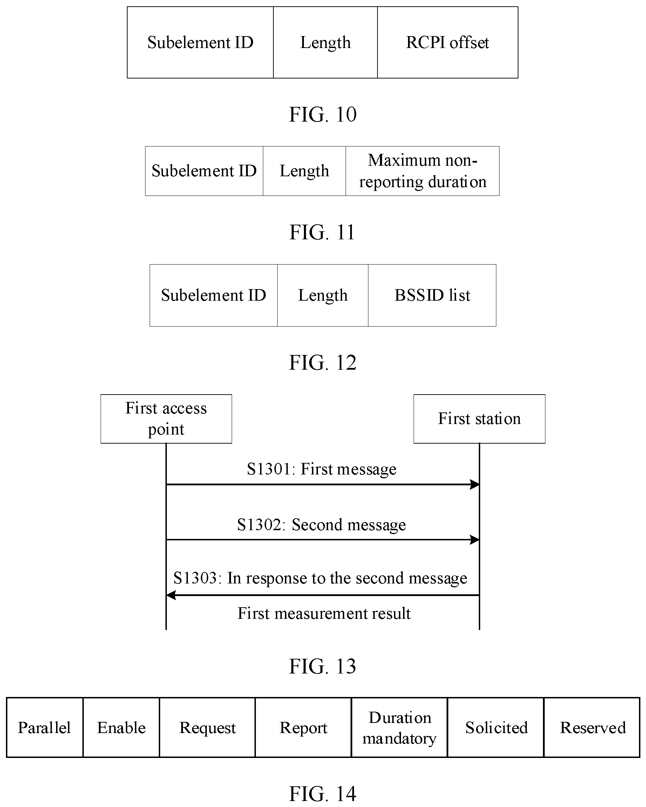

For example, the first measurement result may be carried in an optional subelement field shown in FIG. 9. The optional subelement field shown in FIG. 9 may include a subelement. A name of the subelement may be, for example, an extended measurement report subelement (extended measurement report subelement). A structure of the subelement may be shown in FIG. 10. In FIG. 10, the subelement may include a subelement ID field, a length field, and an RCPI offset (offset) field. Specifically, the first measurement result may be carried in an RCPI offset field shown in FIG. 10.

Step S602: When the difference between the first measurement result and the second measurement result is greater than the first threshold, the first station sends the first measurement result to the first access point. Correspondingly, the first access point receives the first measurement result from the first station.

In the signal measurement method provided in this embodiment of this application, the difference between the first measurement result and the second measurement result may reflect a variation amount of a measurement result related to the second access point. When the variation amount is greater than the first threshold, the first station sends the first measurement result to the first access point, so that the first access point may determine, based on the first measurement result, whether to initiate coordinated transmission to the second access point. In other words, the signal measurement method provided in this embodiment of this application is applicable to a CSR scenario.

Optionally, the signal measurement method provided in this embodiment of this application further includes: When the difference between the first measurement result and the second measurement result is less than or equal to the first threshold within a preset duration, the first station sends the first measurement result to the first access point. Correspondingly, the first access point receives the first measurement result from the first station. In this solution, if there is no preset duration, the first access point cannot receive the first measurement result all the time when the difference between the first measurement result and the second measurement result is always less than or equal to the first threshold, so that the first access point cannot know whether the first station is determining a condition for measurement and reporting of the measurement result. Therefore, the preset duration may be used by the first access point to determine that the first station is continuously determining the condition for measurement and reporting of the measurement result without interruption.

The preset duration in this embodiment of this application may be in units of beacon interval (beacon interval, BI), a millisecond (ms), TU, or 100 TU. This is not limited in embodiments of this application. Herein, the beacon interval may be a beacon interval of a BSS where the first access point is located or a beacon interval of a BSS where the second access point is located. The TU may be 1024 microseconds.

Optionally, the preset duration is carried in the first message. In this solution, since the preset duration is carried in the first message sent by the first access point, the preset duration is set more flexibly, in other words, a value of the preset duration is easier to be modified.

For example, the preset time interval may be carried in an optional subelement field shown in FIG. 7. The optional subelement field shown in FIG. 7 may include a subelement, and a structure of the subelement may be shown in FIG. 11. In FIG. 11, the subelement may include a subelement ID field, a length field, and a maximum unreported duration (maximum unreported duration) field. Specifically, the preset duration may be carried in the maximum unreported duration field shown in FIG. 11.

In addition, the value of the preset duration may further be specified by a protocol. This is not limited in embodiments of this application.

Optionally, the signal measurement method provided in this embodiment of this application further includes: The first access point sends a second message to the first station, where the second message is used to request querying whether the first station has the first measurement result to be fed back. Correspondingly, the first station receives the second message from the first access point. The first station sends a third message to the first access point, where the third message indicates having the first measurement result to be fed back. Correspondingly, the first access point receives the third message from the first station. In this solution, since the first measurement report may be carried in the beacon frame report, the second message may be used to trigger the first station to feed back whether there is a beacon frame report to be fed back.

For example, the third message may include indication information indicating that there is the first measurement result to be fed back. Alternatively, the indication information may indicate that there is no first measurement result to be fed back, and in this case, the indication information may be included in the fifth message sent by the first station to the first access point.

Optionally, the signal measurement method provided in this embodiment of this application further includes: When the first station receives a fourth message from the first access point, the first station updates a state of the first station to have the first measurement result to be fed back. In this solution, the state of the first station may be considered by default as having no first measurement result to be fed back. The fourth message may trigger state switching of the first station, to be specific, the fourth message may trigger the first station to update the state from having no first measurement result to be fed back to having the first measurement result to be fed back.

The foregoing describes the technical solution by taking one second access point as an example. In actual implementation, the first message may include an identifier of one or more second access points, so that the first message may be used to simultaneously trigger the first station to perform measurement on the plurality of second access points. For each second access point, the foregoing technical solution may be performed. When the first message includes an identifier of a plurality of second access points, transmission of a plurality of request messages that are in a one-to-one correspondence with the plurality of second access points may be avoided, thereby achieving a technical effect of reducing signaling overhead.

For example, the identifier of the second access point may be a BSSID corresponding to the second access point. When the first message includes an identifier of a plurality of second access points, the identifiers of the plurality of second access points may be carried in an optional subelement field shown in FIG. 7. The optional subelement field shown in FIG. 7 may include a subelement. A name of the subelement may be, for example, a BSSID list subelement (BSSID list subelement). A structure of the subelement may be shown in FIG. 12. In FIG. 12, the subelement may include a subelement ID field, a length field, and a BSSID list field. Specifically, the identifiers of the plurality of second access points may be carried in a BSSID list field shown in FIG. 12.

FIG. 13 shows a flow of another signal measurement method provided in this embodiment of this application. The embodiment shown in FIG. 13 differs from the embodiment shown in FIG. 6 in a condition for triggering the first station to report the first measurement result. It should be noted that a same message name may represent messages of different functions in different embodiments. This is not limited in embodiments of this application. The embodiment shown in FIG. 13 specifically includes the following steps:
Step S1301: A first access point sends a first message to a first station. Correspondingly, the first station receives the first message from the first access point.

The first message is used to request the first station to send a first measurement result to the first access point when a second message from the first access point is received, the first measurement result is a result measured by the first station at a first time and related to a second access point;

With reference to FIG. 4, the first access point in the embodiment shown in FIG. 13 may be the first AP in FIG. 4, the second access point in the embodiment shown in FIG. 13 may be the second AP in FIG. 4, and the first station in the embodiment shown in FIG. 13 may be the first STA in FIG. 4.

Optionally, a time interval between two adjacent measurements of the first station is less than or equal to a preset time interval.

Optionally, the preset time interval is carried in the first message.

For related descriptions of the preset time interval in embodiments shown in FIG. 13, refer to related descriptions of the preset time interval in step S601. Details are not described herein again.

In a possible implementation, the first measurement result is strength of a signal measured by the first station from the second access point.

Optionally, strength of a signal is an RCPI or an RSNI of the signal.

In another possible implementation, the first measurement result indicates relative strength of signals from the first access point and the second access point to the first station.

For example, the relative strength of the signal from the first access point and the second access point to the first station is a difference between strength of a signal measured by the first station from the first access point and strength of a signal measured by the first station from the second access point.

Optionally, the first measurement result is carried in a measurement response message.

Optionally, the first measurement result is carried in an optional subelement field of the measurement response message.

For related descriptions of the first measurement result in embodiments shown in FIG. 13, refer to related descriptions of the first measurement result in step S601. Details are not described herein again.

Optionally, the first message includes indication information, and the indication information indicates the first station to send the first measurement result to the first access point when the second message from the first access point is received.

In embodiments of this application, the indication information may indicate a mode for the first station to report the first measurement result. A first value of the indication information may indicate the first mode, for example, a solicited mode. The second value of the indication information may indicate the second mode, for example, an unsolicited mode. In the first mode, the first station sends the first measurement result to the first access point when the second message from the first access point is received. In other words, the first station does not send the first measurement result to the first access point if the first station does not receive the second message from the first access point. In the second mode, the first station may actively send the first measurement result to the first access point. For example, the first station may contend to send the first measurement result to the first access point according to an enhanced distributed channel access (enhanced distributed channel access, EDCA) mechanism.

The second message in embodiments of this application may be, for example, a solicited frame or a trigger frame (trigger frame).

Optionally, the first message is a measurement request message.

In a possible implementation, the indication information may be carried in a measurement request mode field of a first message shown in FIG. 7. For example, FIG. 14 is a diagram of a structure of the measurement request mode field. The measurement request mode field may include a parallel (parallel) field, an enable (enable) field, a request (request) field, a report (report) field, a duration mandatory (duration mandatory) field, a solicited (solicited) field, and a reserved (reserved) field. Herein, the parallel field, the enable field, the request field, the report field, the duration mandatory field, and the reserved field are existing fields in the request frame in the current 802.11 standard. The solicited field is a newly added field in embodiments of this application. Specifically, the indication information may be carried in the solicited field shown in FIG. 14.

In another possible implementation, the indication information may be carried in a measurement mode field of the first message shown in FIG. 7. Currently, the values of the measurement mode field are 0, 1, and 2, which occupy two bits. However, the length of the measurement mode field is 8 bits. Therefore, the remaining 6 high-order bits are currently filled with 0. The indication information may be specifically carried in any one of the 6 high-order bits of the measurement mode field. Since the 6 high-order bits in the measurement mode field are located at bits (bit, B) 50 to B55 in the measurement request field, the indication information may be specifically carried in any one of octets B50 to B55 of the measurement request field.

Step S1302: The first access point sends the second message to the first station. Correspondingly, the first station receives the second message from the first access point.

Step S1303: In response to the second message, the first station sends the first measurement result to the first access point. Correspondingly, the first access point receives the first measurement result from the first station.

In the signal measurement method provided in this embodiment of this application, the first access point may send the second message to the first station when the first access point is required to initiate coordinated transmission to the second access point. Then, the first access point may determine whether to initiate coordinated transmission to the second access point according to the first measurement result fed back by the first station. In other words, the signal measurement method provided in this embodiment of this application is applicable to a CSR scenario.

Optionally, the signal measurement method provided in this embodiment of this application further includes: The first access point sends a third message to the first station, where the third message is used to request querying whether the first station has the first measurement result to be fed back. Correspondingly, the first station receives the third message from the first access point. The first station sends a fourth message to the first access point, where the fourth message indicates that the first station has the first measurement result to be fed back. Correspondingly, the first access point receives the fourth message from the first station. In this solution, since the first measurement report may be carried in the beacon frame report, the third message may be used to trigger the first station to feed back whether there is a beacon frame report to be fed back.

For example, the fourth message may include indication information indicating that there is a first measurement result to be fed back. Alternatively, the indication information may indicate that there is no first measurement result to be fed back, and in this case, the indication information may be included in the fifth message sent by the first station to the first access point.

Optionally, the signal measurement method provided in this embodiment of this application further includes: When a difference between the first measurement result is greater than a first threshold, the first station updates a state of the first station to indicate that the first measurement result to be fed back, the second measurement result is a result related to the second access point measured by the first station at a second time, and the second time is earlier than the first time. In this solution, the state of the first station may be considered by default as having no first measurement result to be fed back. A condition that the difference between the first measurement result and the second measurement result is greater than the first threshold may trigger state switching of the first station, to be specific, the condition may trigger the first station to update the state from having no first measurement result to be fed back to having the first measurement result to be fed back.

Optionally, the second measurement result is a measurement result last sent by the first station to the first access point before the first time.

Optionally, the first threshold is carried in the first message.

For related descriptions of the second measurement result and the condition that the difference between the first measurement result and the second measurement result is greater than the first threshold in embodiments shown in FIG. 13, refer to related descriptions in the foregoing step S601. Details are not described herein again.

When steps S1302 and S1303 are not performed within a preset duration, in other words, when the first station does not receive the second message from the first access point within the preset duration, the first station sends the first measurement result to the first access point. Correspondingly, the first access point receives the measurement result from the first station.

Optionally, the preset duration is carried in the first message.

For related descriptions of the preset duration in embodiments shown in FIG. 13, refer to related descriptions of the preset duration in the foregoing step S601. Details are not described herein again.

The foregoing describes the technical solution by taking one second access point as an example. In actual implementation, the first message may include an identifier of one or more second access points, so that the first message may be used to simultaneously trigger the first station to perform measurement on the plurality of second access points. For each second access point, the technical solution described in FIG. 13 may be performed. For related descriptions of that the first message includes an identifier of multiple second access points, refer to the corresponding descriptions in the foregoing step S601. Details are not described herein again.

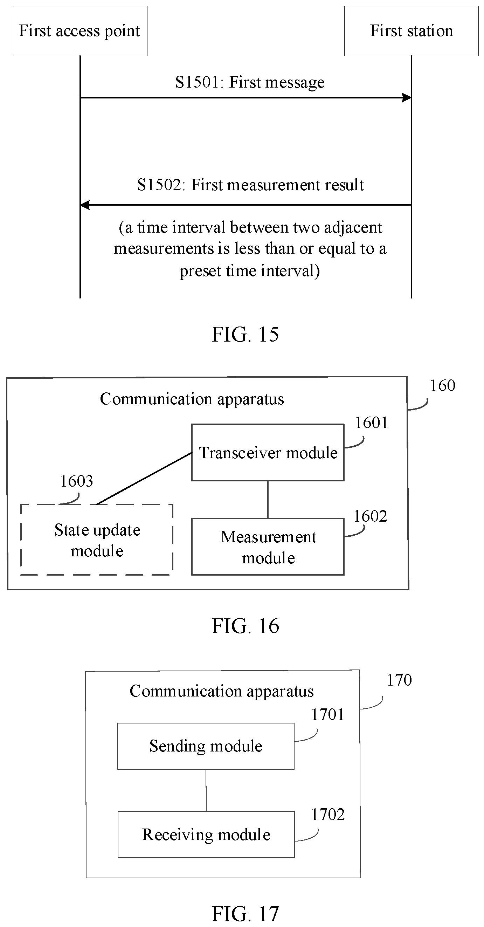

FIG. 15 shows a flow of yet another signal measurement method provided in this embodiment of this application. The embodiment shown in FIG. 15 differs from the embodiment shown in FIG. 6 and FIG. 13 in that the embodiment shown in FIG. 15 imposes a restriction on the measurement interval. It should be noted that a same message name may represent messages of different functions in different embodiments. This is not limited in embodiments of this application. The embodiment shown in FIG. 15 specifically includes the following steps:
Step S1501: the first access point sends a first message to the first station, where the first message is used to request the first station to send a first measurement result to the first access point, the first measurement result is a result related to the second access point measured by the first station at a first time, and a time interval between two adjacent measurements is less than or equal to a preset time interval. Correspondingly, the first station receives the first message from the first access point.

In this embodiment of this application, the first message is used to request the first station to send the first measurement result to the first access point, includes: the first message is used to request the first station to perform measurement and send the measured first measurement result to the first access point.

Optionally, the preset time interval is carried in the first message.

For related descriptions of the preset time interval in embodiments shown in FIG. 15, refer to related descriptions of the preset time interval in step S601. Details are not described herein again.

Optionally, the first measurement result indicates relative strength of signals from the first access point and the second access point to the first station.

Optionally, the relative strength of the signal from the first access point and the second access point to the first station is a difference between strength of a signal measured by the first station from the first access point and strength of a signal measured by the first station from the second access point.

Optionally, the first measurement result is carried in a measurement response message.

Optionally, the first measurement result is carried in an optional subelement field of the measurement response message.

Optionally, the first measurement result is strength of the signal from the second access point measured by the first station.

Optionally, strength of a signal is an RCPI or an RSNI of the signal.

For related descriptions of the first measurement result in embodiments shown in FIG. 15, refer to related descriptions of the first measurement result in step S601. Details are not described herein again.

Step S1502: the first station sends the first measurement result to the first access point. Correspondingly, the first access point receives the first measurement result from the first station.

Optionally, the first message includes one or more second-access-point identifiers. For related descriptions of that the first message includes an identifier of multiple second access points, refer to the corresponding descriptions in the foregoing step S601. Details are not described herein again.

In embodiments of this application, the embodiments shown in FIG. 6, FIG. 13, and FIG. 15 may be combined with each other. For example, when the embodiments shown in FIG. 6 and FIG. 13 are combined, since a condition for triggering the first station to report the first measurement result in the embodiment shown in FIG. 6 is that a difference between the first measurement result and the second measurement result is greater than a first threshold, and a condition for triggering the first station to report the first measurement result in the embodiment shown in FIG. 13 is that the first station receives the second message. Therefore, a condition for triggering the first station to report the first measurement result in a solution obtained by combining the embodiments shown in FIG. 6 and FIG. 13 may be: the difference between the first measurement result and the second measurement result is greater than the first threshold, and the first station receives the second message in the embodiment shown in FIG. 13. A condition for triggering a switching state of the first station in the solution obtained by combining the embodiments shown in FIG. 6 and FIG. 13 may be: the first station receives a fourth message from the first access point in the embodiment shown in FIG. 6, or a difference between the first measurement result and the second measurement result is greater than the first threshold.

It may be understood that in each of the foregoing embodiments, the method and/or step implemented by the first station may alternatively be implemented by a component (for example, a chip or a circuit) applicable to the first station or an apparatus including the first station; and the method and/or step implemented by the first access point may alternatively be implemented by a component (for example, a chip or a circuit) applicable to the first access point or an apparatus including the first access point.

It may be understood that, to implement the foregoing functions, the first station or the first access point includes a hardware structure and/or a software module corresponding to performing the respective functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first station or the first access point may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the first station in this embodiment of this application may be implemented in a form of the communication apparatus 160 shown in FIG. 16. The communication apparatus 160 may include a transceiver module 1601 and a measurement module 1602. Optionally, the communication apparatus 160 may further include a state update module 1603. The communication apparatus 160 is configured to implement functions of the first station in the method embodiment shown in FIG. 6 to FIG. 15.

For example, when the communication apparatus 160 is configured to implement the functions of the first station in the method embodiment shown in FIG. 6: the transceiver module 1601 is configured to receive a first message from a first access point, where the first message is used to request the transceiver module 1601 to send a first measurement result to the first access point when a difference between the first measurement result and a second measurement result is greater than a first threshold, the first measurement result is a result related to a second access point measured by the measurement module 1602 at a first time, the second measurement result is a result related to the second access point measured by the measurement module 1602 at a second time, and the second time is earlier than the first time; and the transceiver module 1601 is further configured to send the first measurement result to the first access point when the difference between the first measurement result and the second measurement result is greater than the first threshold.

For example, when the communication apparatus 160 is configured to implement the functions of the first station in the method embodiment shown in FIG. 13: the transceiver module 1601 is configured to receive a first message from a first access point, where the first message is used to request the transceiver module 1601 to send a first measurement result to the first access point when a second message from the first access point is received, and the first measurement result is a result related to a second access point measured by the measurement module 1602 at a first time; and the transceiver module 1601 is further configured to send the first measurement result to the first access point in response to the received second message from the first access point.

For example, when the communication apparatus 160 is configured to implement the functions of the first station in the method embodiment shown in FIG. 15: the transceiver module 1601 is configured to receive the first message from the first access point, where the first message is used to request the transceiver module 1601 to send a first measurement result to the first access point, the first measurement result is a result related to the second access point measured by the measurement module 1602 at a first time, and a time interval between two adjacent measurements is less than or equal to the preset time interval; and the transceiver module 1601 is further configured to send the first measurement result to the first access point.

For more detailed descriptions of the foregoing transceiver module 1601, the measurement module 1602, and the state update module 1603, refer to related descriptions in the method embodiments shown in FIG. 6 to FIG. 15.

For another example, the first access point in embodiments of this application may be implemented in a form of the communication apparatus 170 shown in FIG. 17. The communication apparatus 170 may include a sending module 1701 and a receiving module 1702. The communication apparatus 170 is configured to implement functions of the first access point in the method embodiment shown in FIG. 6 to FIG. 15.

For example, when the communication apparatus 170 is configured to implement the functions of the first access point in the method embodiment shown in FIG. 6: the sending module 1701 is configured to send a first message to the first station, where the first message is used to request the first station to send a first measurement result to the communication apparatus 170 when a difference between the first measurement result and a second measurement result is greater than a first threshold; and the receiving module 1702 is configured to receive the first measurement result from the first station when the difference between the first measurement result and the second measurement result is greater than the first threshold.

For example, when the communication apparatus 170 is configured to implement the functions of the first access point in the method embodiment shown in FIG. 13: the sending module 1701 is configured to send a first message to the first station, where the first message is used to request the first station to send a first measurement result to the communication apparatus 170 when a second message from the communication apparatus 170 is received; the sending module 1701 is further configured to send the second message to the first station; and the receiving module 1702 is configured to receive the first measurement result from the first station.

For example, when the communication apparatus 170 is configured to implement the functions of the first access point in the method embodiment shown in FIG. 15: the sending module 1701 is configured to send a first message to the first station, where the first message is used to request the first station to send a first measurement result to the communication apparatus 170; and the receiving module 1702 is configured to receive the first measurement result from the first station.

For more detailed descriptions of the foregoing sending module 1701 and the receiving module 1702, refer to related descriptions in the method embodiments shown in FIG. 6 to FIG. 15.

In this embodiment, the communication apparatus 160 or the communication apparatus 170 may be presented in a form of obtaining each functional module through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 160 may be in a form of the WLAN device 500 shown in FIG. 5.

For example, the processor 501 and/or the processor 507 in the WLAN device 500 shown in FIG. 5 may invoke the computer executable instruction stored in the memory 504, so that the WLAN device 500 performs the signal measurement method in the foregoing method embodiment. Specifically, part of the functions/implementation processes of the measurement module 1602 and the state update module 1603 in FIG. 16 may be implemented by using the processor 501 and/or the processor 507 in the WLAN device 500 shown in FIG. 5 to invoke computer executable instructions stored in the memory 504. Part of the functions/implementation processes of the transceiver module 1601 in FIG. 16 may be implemented by the transceiver 502 in FIG. 5.

In a simple embodiment, a person skilled in the art may figure out that the communication apparatus 170 may be in a form of the WLAN device 500 shown in FIG. 5.

For example, the processor 501 and/or the processor 507 in the WLAN device 500 shown in FIG. 5 may invoke the computer executable instruction stored in the memory 504, so that the WLAN device 500 performs the signal measurement method in the foregoing method embodiment. Specifically, part of the functions/implementation processes of the sending module 1701 and the receiving module 1702 in FIG. 17 may be implemented by the transceiver 502 in FIG. 5.

Since the communication apparatus 160 and the communication apparatus 170 provided in this embodiment may perform the foregoing signal measurement method, for technical effects that can be achieved, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built in an SoC (system-on-chip) or an ASIC, or may be an independent semiconductor chip. The processor may further include a necessary hardware accelerator, such as a field programmable gate array (field programmable gate array, FPGA), a PLD (programmable logic device), or a logic circuit that implements special logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory by using an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in this embodiment of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A signal measurement method, applied to a first station, comprising:
receiving a first message from a first access point, wherein the first message is used to request the first station to send a first measurement result to the first access point when a difference between the first measurement result and a second measurement result is greater than a first threshold, the first measurement result is a result measured by the first station at a first time and related to a second access point, the second measurement result is a result measured by the first station at a second time and related to the second access point, and the second time is earlier than the first time; and
when the difference between the first measurement result and the second measurement result is greater than the first threshold, sending the first measurement result to the first access point.

2. The method according to claim 1, wherein a time interval between two adjacent measurements of the first station is less than or equal to a preset time interval.

3. The method according to claim 2, wherein the preset time interval is carried in the first message.

4. The method according to any one of claims 1 to 3, wherein the method further comprises:
when the difference between the first measurement result and the second measurement result is less than or equal to the first threshold within a preset duration, sending the first measurement result to the first access point.

5. The method according to claim 4, wherein the preset duration is carried in the first message.

6. The method according to any one of claims 1 to 5, wherein the first measurement result and/or the second measurement result indicates/indicate relative strength of signals from the first access point and the second access point to the first station.

7. The method according to claim 6, wherein the relative strength of the signals from the first access point and the second access point to the first station is a difference between strength of a signal measured by the first station from the first access point and strength of a signal measured by the first station from the second access point.

8. The method according to any one of claims 1 to 7, wherein the first measurement result is carried in a measurement response message.

9. The method according to claim 8, wherein the first measurement result is carried in an optional subelement field of the measurement response message.

10. The method according to any one of claims 1 to 5, wherein the first measurement result and/or the second measurement result is/are strength of a signal measured by the first station from the second access point.

11. The method according to claim 7 or 10, wherein the strength of the signal is a received channel power indicator RCPI or a received signal-to-noise indicator RSNI of the signal.

12. The method according to any one of claims 1 to 11, wherein the first message comprises an identifier of one or more second access points.

13. The method according to any one of claims 1 to 12, wherein the method further comprises:
receiving a second message from the first access point, wherein the second message is used to request querying whether the first station has the first measurement result to be fed back; and
sending a third message to the first access point, wherein the third message indicates that the first station has the first measurement result to be fed back.

14. The method according to claim 13, wherein the method further comprises:
when the first station receives a fourth message from the first access point, updating a state of the first station to have the first measurement result to be fed back.

15. The method according to any one of claims 1 to 14, wherein the second measurement result is a measurement result last sent by the first station to the first access point before the first time.

16. The method according to any one of claims 1 to 15, wherein the first threshold is carried in the first message.

17. A signal measurement method, applied to a first station, comprising:
receiving a first message from a first access point, wherein the first message is used to request the first station to send a first measurement result to the first access point when a second message from the first access point is received, and the first measurement result is a result measured by the first station at a first time and related to a second access point; and
sending the first measurement result to the first access point in response to the second message received from the first access point.

18. The method according to claim 17, wherein a time interval between two adjacent measurements of the first station is less than or equal to a preset time interval.

19. The method according to claim 18, wherein the preset time interval is carried in the first message.

20. The method according to any one of claims 17 to 19, wherein the first measurement result indicates relative strength of signals from the first access point and the second access point to the first station.

21. The method according to claim 20, wherein the relative strength of the signals from the first access point and the second access point to the first station is a difference between strength of a signal measured by the first station from the first access point and strength of a signal measured by the first station from the second access point.

22. The method according to any one of claims 17 to 19, wherein the first measurement result is strength of a signal measured by the first station from the second access point.

23. The method according to any one of claims 17 to 22, wherein the first message comprises an identifier of one or more second access points.

24. The method according to any one of claims 17 to 23, wherein the first message comprises indication information, and the indication information indicates the first station to send the first measurement result to the first access point when the second message from the first access point is received.

25. The method according to claim 24, wherein the first message is a measurement request message, and the indication information is carried in a measurement request mode field or a measurement mode field of the first message.

26. The method according to any one of claims 17 to 25, wherein the method further comprises:
receiving a third message from the first access point, wherein the third message is used to request querying whether the first station has the first measurement result to be fed back; and
sending a fourth message to the first access point, wherein the fourth message indicates that the first station has the first measurement result to be fed back.

27. A communication apparatus, wherein the communication apparatus comprises a module or a unit configured to implement the method according to any one of claims 1 to 16; or a module or a unit configured to implement the method according to any one of claims 17 to 26.

28. A communication apparatus, comprising: a memory and a processor coupled to the memory, wherein the memory is configured to store a program, and the processor is configured to execute the program stored in the memory; and when the communication apparatus runs, the processor runs the program, so that the communication apparatus performs the method according to any one of claims 1 to 16; or the communication apparatus performs the method according to any one of claims 17 to 26.

29. A communication system, wherein the communication system comprises a first access point, a second access point and a first station; wherein the first station is configured to perform the method according to any one of claims 1 to 16; or the first station is configured to perform the method according to any one of claims 17 to 26.

30. A computer-readable storage medium, wherein the computer-readable storage medium stores a computer program, and when the computer program is executed by a computer, the computer is enabled to perform the method according to any one of claims 1 to 16; or when the computer program is executed by a computer, the computer is enabled to perform the method according to any one of claims 17 to 26.
